(19) **Europäisches Patentamt / European Patent Office / Office européen des brevets**

(11) **EP 4 281 743 B1**

(12) **FASCICULE DE BREVET EUROPEEN**

(45) Date de publication et mention de la délivrance du brevet:
**04.03.2026 Bulletin 2026/10**

(21) Numéro de dépôt: **22705425.1**

(22) Date de dépôt: **19.01.2022**

(51) Classification Internationale des Brevets (IPC):
**G01M 15/14** *(2006.01)*  **G01M 13/045** *(2019.01)*

(52) Classification Coopérative des Brevets (CPC):
**G01M 13/045; G01M 15/14**

(86) Numéro de dépôt international:
**PCT/FR2022/050103**

(87) Numéro de publication internationale:
**WO 2022/157453 (28.07.2022 Gazette 2022/30)**

(54) **PROCEDE DE SURVEILLANCE DE L'ETAT DE COMPOSANTS MECANIQUES SUR UNE LIGNE D'ARBRE, DISPOSITIF ET SYSTEME DE SURVEILLANCE ASSOCIES**

VERFAHREN ZUR ZUSTANDSÜBERWACHUNG VON MECHANISCHEN KOMPONENTEN AUF EINER WELLENLEITUNG, ZUGEHÖRIGE ÜBERWACHUNGSVORRICHTUNG UND SYSTEM

METHOD FOR MONITORING THE STATE OF MECHANICAL COMPONENTS ON A SHAFT LINE, ASSOCIATED MONITORING DEVICE AND SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **25.01.2021 FR 2100663**

(43) Date de publication de la demande:
**29.11.2023 Bulletin 2023/48**

(73) Titulaire: **SAFRAN**
**75015 Paris (FR)**

(72) Inventeurs:
- **ASSOUMANE, Amadou**
  **77550 Moissy-Cramayel (FR)**
- **ABBOUD, Dany**
  **77550 Moissy-Cramayel (FR)**
- **EL BADAOUI, Mohammed**
  **77550 Moissy-Cramayel (FR)**

(74) Mandataire: **Cabinet Beau de Loménie**
**103, rue de Grenelle**
**75340 Paris Cedex 07 (FR)**

(56) Documents cités:
**EP-A1- 3 732 457    FR-A1- 2 952 177**

**Description**

Technique antérieure

La présente invention appartient au domaine général de la surveillance et de la maintenance prédictive de composants mécaniques. Elle concerne plus particulièrement un procédé de surveillance de l'état de composants mécaniques de type roulements et engrenages sur une ligne d'arbre intégrée à une machine tournante. Elle concerne également un dispositif et un système de surveillance configurés pour mettre en œuvre un tel procédé de surveillance. L'invention trouve une application particulièrement avantageuse, bien que nullement limitative, dans le contexte de la surveillance temps réel de l'état de santé de tels composants mécaniques, notamment lorsque la machine tournante concernée est un moteur d'aéronef.

Les lignes d'arbres intégrées à des machines tournantes sont, de manière conventionnelle, équipées de différentes pièces ou composants mécaniques, comme typiquement des roulements et des engrenages. On note que l'expression « machine tournante » fait classiquement référence à une machine dont la cinématique obéit à la physique des masses en rotation, et concerne à ce titre tout système rotatif tels que par exemple les moteurs électriques, les turbomachines, les actionneurs électromécaniques, les éoliennes, etc...

La surveillance de l'état de santé de tels composants mécaniques joue un rôle fondamental pour, d'une part, assurer une bonne durée de vie de la ligne d'arbre qui en est équipée (et subséquemment de la machine tournante à laquelle est intégrée ladite ligne d'arbre), mais aussi d'autre part éviter tout incident, voire accident, dont l'origine pourrait être rapportée à une usure excessive desdits composants mécaniques.

On comprend dès lors que pour éviter les désagréments précités, et plus généralement assurer une détection précoce d'éventuels défauts pouvant affecter lesdits composants mécaniques, il est de toute première importance d'assurer une surveillance régulière de leur état de santé.

A cet effet, on connait des dispositifs aptes à surveiller de manière continue des machines tournantes par analyse vibratoire. De tels dispositifs fonctionnent schématiquement à partir de mesures vibratoires effectuées par exemple au moyen d'accéléromètres placés sur des éléments de structure équipant ces machines. Ces mesures vibratoires peuvent également être complétées par l'utilisation de capteurs de déplacement aptes à mesurer le déplacement relatif de l'arbre vis-à-vis desdits éléments de structure. Lorsque les mesures vibratoires sont effectuées, on recourt alors à une analyse fréquentielle du spectre enregistré, en partant du principe qu'un défaut de fonctionnement d'un composant mécanique peut y être repéré, par exemple au moyen d'une évaluation d'amplitude de raies spectrales caractérisant la cinématique du composant mécanique en question. De cette manière, il est possible de contrôler dans la durée l'état de fonctionnement d'un ou plusieurs composants sur une ligne d'arbre.

Il n'en reste pas moins que l'analyse vibratoire telle que décrite ci-avant demeure peu adaptée à la surveillance d'équipements tournants dont les régimes ne sont pas stationnaires (en charge et vitesse de rotation), ce qui la rend en pratique inapplicable à une grande partie de machines tournantes. Cela concerne notamment le domaine de l'aéronautique où les machines tournantes en question sont exploitées selon de grandes variations de régime (exemple : moteurs d'aéronef, dont en particulier les turbomachines, lors des phases de décollage et d'atterrissage).

Certains développements techniques relativement récents ont alors été proposés pour permettre une surveillance de l'état des composants mécaniques en temps réel et adaptée aux régimes variables. Il n'en reste pas moins que de tels développements sont encore loin de pouvoir être considérés comme satisfaisant. Leur mise en œuvre n'est en effet envisageable que pour des vitesses de rotation d'arbre inférieures à 60 tours par minute, excluant de fait toute application où une telle contrainte n'est pas respectée (donc en particulier dans le domaine de l'aéronautique). On connait notamment le document FR 2 952 177 A1 qui décrit un procédé de détection d'un endommagement d'au moins un roulement de palier supportant en rotation au moins un arbre rotatif d'un moteur et le document EP 3 732 457 A1 qui décrit une méthode de surveillance d'un roulement équipant un dispositif rotatif.

Exposé de l'invention

La présente invention a pour objectif de remédier à tout ou partie des inconvénients de l'art antérieur, notamment ceux exposés ci-avant, en proposant une solution qui permette de surveiller de manière précise et en temps réel l'état de composants mécaniques de type roulements et engrenages sur une ligne d'arbre équipant une machine tournante. En outre, la solution proposée par l'invention permet de réaliser ladite surveillance en régime variable et sans limitation concernant la vitesse de rotation de l'arbre, de sorte qu'elle peut avantageusement être mise en œuvre pour tout domaine technique requérant l'utilisation de machines tournantes.

A cet effet, et selon un premier aspect, l'invention concerne un procédé mis en œuvre par ordinateur de surveillance de l'état de composants mécaniques de type roulements et engrenages sur une ligne d'arbre équipant une machine tournante. Ledit procédé comporte une étape d'obtention d'au moins une mesure $y_c[k]$, k étant un indice entier, d'accélération absolue de l'arbre dans un repère fixe lié à la machine tournante, ainsi qu'un ensemble d'étapes de :

- obtention d'une valeur $f_r[k]$ de la fréquence de rotation de l'arbre pour un instant en lequel ladite au moins une mesure $y_c[k]$ a été préalablement acquise,
- détermination d'une matrice $H[k]$ permettant de définir un modèle d'état décrit par :

$$x[k+1] = x[k] + w[k] \qquad et \qquad Y[k] = \begin{bmatrix} y_c[k] \\ SE[k] \end{bmatrix} = H[k] \times x[k] + v[k]$$

où $w[k]$ est un bruit aléatoire et $v[k]$ est un bruit associé à ladite au moins une mesure $y_c[k]$, $H[k]$ est définie à partir de la valeur $f_r[k]$, $SE[k]$ est égal à l'espérance du produit entre $y_c[k]$ et la valeur conjuguée de $y_c[k]$, $x[k]$ est un vecteur comportant, pour chaque composant mécanique, un sous-vecteur dont les composantes sont représentatives d'une contribution dudit composant mécanique au vecteur $Y[k]$,
- détermination d'un estimateur du vecteur $x[k]$ à partir de ladite matrice $H[k]$,

ledit ensemble d'étapes comportant en outre, pour au moins un composant mécanique, des étapes de :

- détermination, à partir dudit estimateur, d'une quantité caractéristique de ladite contribution associée audit composant mécanique,
- détection d'un éventuel défaut dudit au moins un composant mécanique en fonction d'une comparaison de ladite quantité avec un seuil.

Le procédé de surveillance proposé par l'invention repose donc sur l'utilisation du modèle d'état qui permet de représenter (modéliser) les contributions respectives des composants mécaniques de la ligne d'arbre aux vibrations subies par ledit arbre lors du fonctionnement de la machine tournante.

Plus particulièrement, les contributions associées aux composants mécaniques de type engrenages se font au niveau de la composante $y_c[k]$ du vecteur $Y[k]$, alors que les contributions associées aux composants de type roulements se font au niveau de la composante $SE[k]$ dudit vecteur $Y[k]$. Dit encore autrement, le vecteur $Y[k]$ forme une représentation de la cinématique des composants mécaniques dont il convient de surveiller l'état.

Une telle approche de modélisation du comportement vibratoire de l'arbre, et donc a fortiori des composants mécaniques qui l'équipent, permet de distinguer avantageusement la présente invention de l'état de la technique. En effet, en procédant ainsi, il n'est plus nécessaire de limiter la surveillance des composantes mécaniques à des vitesses de rotation d'arbre inférieures à 60 tours par minute. Le procédé selon l'invention permet donc de réaliser ladite surveillance quelle que soit la vitesse de rotation de l'arbre. Il est en outre indépendant du régime de fonctionnement de la machine tournante, et peut donc être mis en œuvre dans le cas d'un régime variable.

Le procédé de surveillance selon l'invention offre également la possibilité de mettre en œuvre les étapes nécessaires à la détection d'éventuels défauts de composants mécaniques après chaque obtention d'une mesure d'accélération absolue de l'arbre. Il en résulte la possibilité d'établir une surveillance simultanée et en temps réel de l'état desdits composants mécaniques, contribuant ainsi à une détection précoce d'éventuels défauts.

Enfin, un avantage supplémentaire du procédé de surveillance selon l'invention tient à la robustesse de l'estimateur du vecteur $x[k]$ qui est déterminé. Cette robustesse découle du fait qu'il n'est fait aucune hypothèse sur la nature statistique des bruits du modèle d'état et en ce que l'estimateur prend en compte non seulement les erreurs liées aux mesures mais aussi les erreurs liées à la modélisation, en tant que telle, du modèle d'état .

Dans des modes particuliers de mise en œuvre, le procédé de surveillance peut comporter en outre l'une ou plusieurs des caractéristiques suivantes, prises isolément ou selon toutes les combinaisons techniquement possibles.

Dans des modes particuliers de mise en œuvre, l'estimateur du vecteur $x[k]$ est déterminé au moyen d'un algorithme d'optimisation minimax ou d'un algorithme d'optimisation de moindres carrés.

Dans des modes particuliers de mise en œuvre, ladite quantité est représentative d'une amplitude ou d'une phase ou d'une énergie de ladite contribution.

Dans des modes particuliers de mise en œuvre, ledit procédé comporte en outre, si un défaut est détecté, une étape d'émission d'une alerte.

Le fait d'émettre une alerte en cas de détection positive d'un défaut permet d'obtenir sans délai une information quant à l'existence dudit défaut.

Dans des modes particuliers de mise en œuvre, une pluralité de mesures d'accélération absolue est obtenue de manière récurrente, ledit ensemble d'étapes étant mis en œuvre après chaque obtention d'une mesure d'accélération absolue.

Selon un autre aspect, l'invention concerne un programme d'ordinateur comportant des instructions pour la mise en œuvre d'un procédé de surveillance selon l'invention lorsque ledit programme d'ordinateur est exécuté par un ordinateur.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

Selon un autre aspect, l'invention concerne un support d'informations ou d'enregistrement lisible par un ordinateur sur lequel est enregistré un programme d'ordinateur selon l'invention.

Le support d'informations ou d'enregistrement peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations ou d'enregistrement peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations ou d'enregistrement peut être un circuit intégré dans lequel le programme est incorporé, le circuit étant adapté pour exécuter ou pour être utilisé dans l'exécution du procédé en question.

Selon un autre aspect, l'invention concerne un dispositif de surveillance de l'état de composants mécaniques de type roulements et engrenages sur une ligne d'arbre équipant une machine tournante. Ledit dispositif de traitement comporte :

- un premier module d'obtention configuré pour obtenir au moins une mesure $y_c[k]$, k étant un indice entier, d'accélération absolue de l'arbre dans un repère fixe lié à la machine tournante,
- un deuxième module d'obtention configuré pour obtenir une valeur $f_r[k]$ de la fréquence de rotation de l'arbre pour un instant en lequel ladite au moins une mesure $y_c[k]$ a été acquise,
- un premier module de détermination configuré pour déterminer une matrice H[k] permettant de définir un modèle d'état décrit par :

$$x[k+1] = x[k] + w[k] \qquad et \qquad Y[k] = \begin{bmatrix} y_c[k] \\ SE[k] \end{bmatrix} = H[k] \times x[k] + v[k]$$

où w[k] est un bruit aléatoire et v[k] est un bruit associé à ladite au moins une mesure $y_c[k]$, H[k] est définie en fonction de la valeur $f_r[k]$, SE[k] est égal à l'espérance du produit entre $y_c[k]$ et la valeur conjuguée de $y_c[k]$, x[k] est un vecteur comportant, pour chaque composant mécanique, un sous-vecteur dont les composantes sont représentatives de la contribution dudit composant mécanique au vecteur Y[k],

- un deuxième module de détermination configuré pour déterminé un estimateur du vecteur x[k] à partir de ladite matrice H[k],
- un troisième module de détermination configuré pour déterminer, à partir dudit estimateur, au moins une quantité caractéristique de ladite contribution associée à un composant mécanique,
- un module de comparaison configuré pour comparer ladite au moins une quantité avec un seuil, de sorte à obtenir un résultat de comparaison,
- un module de détection configuré pour détecter un éventuel défaut dudit au moins un composant mécanique en fonction du résultat de comparaison.

Selon un autre aspect, l'invention concerne un système de surveillance de l'état de composants mécaniques de type roulements et engrenages sur une ligne d'arbre équipant une machine tournante. Ledit système de surveillance comporte :

- des moyens d'acquisition d'au moins une mesure $y_c[k]$, k étant un indice entier, d'accélération absolue de l'arbre dans un repère fixe lié à la machine tournante,
- un dispositif de surveillance selon l'invention.

Enfin, selon un dernier aspect, l'invention concerne un aéronef comportant un système de surveillance selon l'invention.

Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :

[Fig. 1] la figure 1 représente schématiquement, dans son environnement, un mode particulier de réalisation d'un système de surveillance selon l'invention, ledit système de surveillance étant configuré pour surveiller l'état de composants mécaniques de type roulements et engrenages sur une ligne d'arbre d'un moteur d'aéronef ;

[Fig. 2] la figure 2 représente schématiquement un exemple d'architecture matérielle d'un dispositif de surveillance selon l'invention appartenant au système de surveillance de la figure 1 ;

[Fig. 3] la figure 3 représente, sous forme d'ordinogramme, un mode particulier de mise en œuvre d'un procédé de surveillance selon l'invention par le dispositif de surveillance de la figure 2.

Description des modes de réalisation

La présente invention est ici décrite dans le cadre d'une application au domaine de l'aéronautique, plus particulièrement celui de la surveillance et de la maintenance prédictive de composants mécaniques de type roulements et engrenages d'une ligne d'arbre équipant un moteur d'aéronef.

Pour la suite de la description, on considère de manière nullement limitative que ledit aéronef est de type avion, par exemple un avion civil apte à transporter des passagers et équipé d'une pluralité de moteurs identiques de type turbomoteurs. A titre d'exemple, lesdits moteurs sont des turboréacteurs.

Rien n'exclut cependant, suivant d'autres exemples non détaillés ici, de considérer d'autres types de turbomoteurs, comme par exemple un turbopropulseur, mais également, et de manière plus générale, des moteurs qui ne sont pas des turbomoteurs, comme par exemple des moteurs à pistons. L'invention est en effet applicable à tout type de moteur d'avion comportant une ligne d'arbre sur laquelle sont agencés des composants mécaniques de type roulements et engrenages, et dont on souhaite surveiller l'état au cours du temps comme cela est décrit en détail ultérieurement. Bien entendu, rien n'exclut non plus de considérer un aéronef d'un autre type, comme par exemple un hélicoptère.

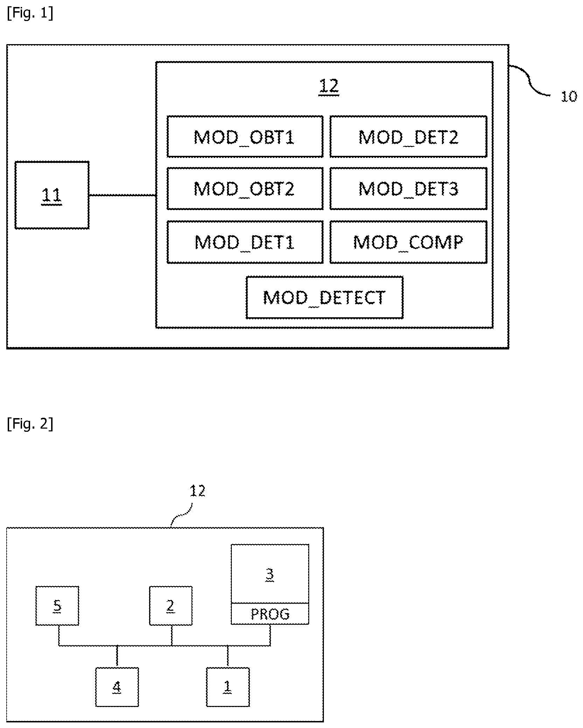

La figure 1 représente schématiquement, dans son environnement, un mode particulier de réalisation d'un système 10 de surveillance selon l'invention.

Ledit système 10 de surveillance est configuré pour surveiller l'état de composants mécaniques de type roulements et engrenages sur la ligne d'arbre du moteur d'aéronef. A cet effet, ledit système 10 comporte des moyens d'acquisition 11 configurés pour acquérir :

- au moins une mesure $y_c[k]$ d'accélération absolue de l'arbre dans un repère fixe lié au moteur de l'aéronef (k étant un indice entier indiquant un rang d'acquisition parmi une série de mesures d'accélération absolue),
- au moins une mesure $v_r[k']$ de vitesse de rotation de l'arbre (k' étant un indice entier indiquant un rang d'acquisition parmi une série de mesures de vitesse de rotation).

Par « accélération absolue », on fait classiquement référence ici à l'accélération globale de l'arbre, c'est-à-dire l'accélération traduisant les vibrations subies par l'arbre du fait que ce dernier est solidaire du moteur de l'aéronef. Ladite accélération absolue étant définie dans un repère fixe lié au moteur de l'aéronef, on comprend bien entendu qu'elle demeure indépendante de la vitesse de déplacement dudit aéronef.

De manière conventionnelle, lesdits moyens d'acquisition 11 comportent une chaîne d'acquisition comprenant au moins un capteur dédié aux mesures d'accélération absolue $y_c[k]$, comme par exemple un accéléromètre de conception connue en soi, et au moins un capteur dédié aux mesures de vitesse de rotation de l'arbre $v_r[k']$, comme par exemple un codeur optique ou bien un tachymètre. Ladite chaîne d'acquisition comporte encore d'autres éléments, comme notamment une carte d'acquisition, des moyens électroniques d'amplification et/ou de filtrage, un convertisseur analogique-numérique, etc. Ces aspects ne sont pas davantage détaillés ici car sortant du cadre de la présente invention.

D'une manière générale, l'homme du métier sait comment réaliser et acquérir des mesures d'accélération absolue et de vitesse de rotation de l'arbre, et sait donc, notamment, choisir des capteurs adéquats pour chacune des grandeurs considérées (accélération absolue, vitesse de rotation), par exemple dans les catalogues des produits offerts par les fabricants spécialisés. Il sait en outre positionner ces capteurs ainsi que choisir une fréquence d'échantillonnage pour acquérir les mesures concernées. A titre d'exemple nullement limitatif, la fréquence d'échantillonnage est choisie de sorte à être au moins dix fois plus grande que la fréquence maximale du signal d'accélération absolue/de vitesse de rotation obtenu grâce aux capteurs dédiés à l'acquisition de ce signal.

En définitive, et en sortie desdits moyens d'acquisition 11, les mesures d'accélération absolue/de vitesse de rotation acquises correspondent à des données numériques qui forment un signal échantillonné pouvant être traité par des moyens informatiques pour surveiller l'état des composants mécaniques agencés sur l'arbre tournant, comme cela est décrit plus en détails ci-après.

Il est à noter que, pour la suite de la description, il est indifféremment fait référence à « des mesures $y_c[k]$ » ou à « un signal échantillonné $y_c$ » (un échantillon de ce signal correspondant donc à une mesure $y_c[k]$), ces deux expressions revêtant la même signification. Bien entendu, une telle remarque vaut également en ce qui concerne les mesures $v_r[k']$ de vitesse de rotation de l'arbre.

Les mesures d'accélération absolue/de vitesse de rotation acquises par les moyens d'acquisition 11 sont réalisées au cours d'un ou plusieurs intervalles temporels, dit « intervalles d'acquisition », étant entendu que chaque intervalle d'acquisition contient une période au cours de laquelle le moteur de l'aéronef est en fonctionnement. Par « fonctionnement du moteur de l'aéronef », on fait référence ici au fait que le moteur de l'aéronef a démarré. Une telle configuration couvre bien entendu les phases de roulage avant et après atterrissage (phases encore dénommées « taxi » dans la littérature anglo-saxonne), la phase de décollage, la phase de croisière, la phase d'atterrissage, mais également les phases durant lesquelles l'aéronef n'a pas encore quitté son parking avant le décollage ou bien a déjà atteint son parking après l'atterrissage, ses moteurs étant néanmoins en fonctionnement.

Il convient de noter qu'aucune limitation n'est attachée à la durée d'un intervalle d'acquisition, ni même au nombre d'intervalles d'acquisition pouvant être envisagé. En pratique, la durée d'un intervalle d'acquisition est par exemple définie de manière directe, via la donnée de ladite durée en secondes, ou bien encore par exemple de manière indirecte, via la donnée d'un nombre de cycles de rotation de l'arbre tournant à acquérir.

On note par ailleurs que les instants en lesquels les mesures $y_c[k]$ d'accélération absolue sont acquises peuvent différer ou non des instants en lesquels les mesures $v_r[k']$ de vitesse de rotation sont acquises. En tout état de cause, dès lors que des mesures de ces deux grandeurs sont acquises au cours d'un même intervalle d'acquisition, il est bien entendu possible d'associer à un instant donné compris dans ledit d'intervalle d'acquisition une mesure d'accélération absolue et une mesure de vitesse de rotation, par exemple au moyen de techniques d'interpolation.

Le système de surveillance 10 comporte également un dispositif de surveillance 12 configuré pour réaliser, à partir notamment de mesures acquises par les moyens d'acquisition 11, des traitements permettant de surveiller l'état (i.e. de réaliser un suivi de l'usure) de composants mécaniques de type roulements et engrenages sur la ligne d'arbre du moteur de l'aéronef, en mettant en œuvre un procédé de surveillance selon l'invention.

Dans le présent mode de réalisation, le dispositif de surveillance 12 est intégré à une unité de calcul équipant l'aéronef et encore connue sous le nom de FADEC (acronyme de l'expression anglo-saxonne « Full Authority Digital Engine Control »). Ladite unité FADEC est, de manière connue en soi, configurée pour piloter et réguler de manière optimale le fonctionnement du moteur. Toutefois, et à la différence d'une unité FADEC de l'état de l'art, l'unité FADEC décrite ici permet également, du fait que le dispositif de surveillance 12 y est intégré, de surveiller l'état des composants mécaniques de type roulements et engrenages sur la ligne d'arbre.

Le choix selon lequel le dispositif de surveillance 12 est intégré à l'unité FADEC de l'aéronef ne constitue toutefois qu'une variante d'implémentation de l'invention. Ainsi, rien n'exclut d'avoir, par exemple, un dispositif de traitement 12 externe (i.e. non intégré électroniquement) à l'unité FADEC mais néanmoins agencé dans l'aéronef.

La <u>figure 2</u> représente schématiquement un exemple d'architecture matérielle du dispositif de surveillance 12 selon l'invention appartenant au système de surveillance 10 de la figure 1.

Tel qu'illustré par la figure 2, le dispositif de surveillance 12 dispose de l'architecture matérielle d'un ordinateur. Ainsi, le dispositif de surveillance 12 comporte, notamment, un processeur 1, une mémoire vive 2, une mémoire morte 3 et une mémoire non volatile 4. Il comporte en outre des moyens de communication 5.

La mémoire morte 3 du dispositif de surveillance 12 constitue un support d'enregistrement conforme à l'invention, lisible par le processeur 1 et sur lequel est enregistré un programme d'ordinateur PROG conforme à l'invention, comportant des instructions pour l'exécution d'étapes du procédé de surveillance selon l'invention. Le programme PROG définit des modules fonctionnels du dispositif de surveillance 12, qui s'appuient ou commandent les éléments matériels 1 à 5 du dispositif de surveillance 12 cités précédemment, et qui comprennent notamment :

- un premier module d'obtention MOD_OBT1 configuré pour obtenir au moins une mesure $y_c[k]$ d'accélération absolue de l'arbre,
- un deuxième module d'obtention MOD_OBT2 configuré pour obtenir une valeur $f_r[k]$ de la fréquence de rotation de l'arbre pour un instant en lequel ladite au moins une mesure $y_c[k]$ a été préalablement acquise,
- un premier module de détermination MOD_DET1 configuré pour déterminer une matrice $H[k]$ permettant de définir un modèle d'état décrit par :

$$x[k+1] = x[k] + w[k] \qquad et \qquad Y[k] = \begin{bmatrix} y_c[k] \\ SE[k] \end{bmatrix} = H[k] \times x[k] + v[k]$$

où $w[k]$ est un bruit aléatoire et $v[k]$ est un bruit associé à ladite au moins une mesure $y_c[k]$, $H[k]$ est définie à partir de la valeur $f_r[k]$, $SE[k]$ est égal à l'espérance du produit entre $y_c[k]$ et la valeur conjuguée de $y_c[k]$, $x[k]$ est un vecteur comportant, pour chaque composant mécanique, un sous-vecteur dont les composantes sont représentatives d'une contribution dudit composant mécanique au vecteur y[k],

- un deuxième module de détermination MOD_DET2 configuré pour déterminé un estimateur du vecteur x[k] à partir de ladite matrice H[k],
- un troisième module de détermination MOD_DET3 configuré pour déterminer, à partir dudit estimateur, une quantité caractéristique de ladite contribution associée à un composant mécanique,
- un module de comparaison MOD_COMP configuré pour comparer ladite quantité avec un seuil, de sorte à obtenir un résultat de comparaison,
- un module de détection MOD_DETECT configuré pour détecter un éventuel défaut dudit au moins un composant mécanique en fonction du résultat de comparaison,
- un module d'alerte MOD_ALERT configuré pour émettre une alerte si un défaut est détecté pour un composant mécanique.

Les moyens de communication 5 sont configurés pour permettre au dispositif de surveillance 12 de communiquer, notamment, avec les moyens d'acquisition 11, de sorte à pouvoir obtenir directement une ou plusieurs mesures d'accélération absolue et/ou de vitesse de rotation acquises par ces derniers. A cet effet, les moyens de communication 5 s'appuient sur une interface de communication, filaire ou non filaire, apte à mettre en œuvre tout protocole connu (Ethernet, Wifi, Bluetooth, 3G, 4G, 5G, etc.) adapté à un échange de données entre le dispositif de surveillance 12 et les moyens d'acquisition 11. On note que, dans cet exemple de réalisation, les moyens de communication 5 intègrent ledit premier module d'obtention MOD_OBT1. Bien entendu, les moyens d'acquisition 11 sont eux-mêmes pourvus de moyens de communication adaptés à la transmission d'une ou plusieurs mesures d'accélération absolue et/ou de vitesse de rotation.

Dans le présent mode de réalisation, le deuxième module d'obtention MOD_OBT2 est également intégré auxdits moyens de communication 5 et chaque valeur $f_r[k]$ de la fréquence de rotation de l'arbre est déterminée par les moyens d'acquisition 11 eux-mêmes à partir des mesures de vitesse de rotation acquises. Autrement dit, dans le mode de réalisation décrit ici, le dispositif de surveillance 12 obtient pour chaque mesure $y_c[k]$ d'accélération absolue de l'arbre une valeur $f_r[k]$ de la fréquence de rotation dudit arbre, cette obtention prenant ici la forme d'un échange de données entre les moyens d'acquisition 11 et ledit deuxième module d'obtention MOD_OBT2.

Une valeur de la fréquence de rotation de l'arbre sur lequel est fixé un capteur dédié aux mesures $v_r[k']$ de vitesse de rotation peut être déterminée selon toute technique connue de l'homme du métier.

Par exemple, et dans un premier temps, le signal de vitesse de rotation peut être analysé pour en déterminer la nature. Il peut en effet s'agir d'un signal carré ou sinusoïdal ou bien encore d'une série d'impulsions. A partir de cette analyse, il est alors possible, dans un deuxième temps, de mettre en œuvre un algorithme permettant d'estimer la fréquence de rotation de l'arbre de référence. Un tel algorithme peut être décliné selon trois variantes de mise en œuvre : la première variante repose sur une détection des instants des fronts montants lorsque le signal du capteur de vitesse est carré ; la deuxième variante repose sur une estimation de la fréquence instantanée du signal sinusoïdal ; la troisième variante repose sur une localisation temporelle de pics lorsque le signal du capteur de vitesse est une série d'impulsions.

Il est à noter que le choix selon lequel une valeur de la fréquence de rotation est déterminée par les moyens d'acquisition 11 en association avec chaque mesure $y_c[k]$ d'accélération absolue de l'arbre ne constitue qu'un exemple de réalisation de l'invention.

D'autres variantes de réalisation restent néanmoins envisageables. Par exemple, les traitements permettant de déterminer une ou plusieurs valeurs de la fréquence de rotation peuvent être mis en œuvre par le dispositif de surveillance 12 une fois que celui-ci a obtenu, en provenance des moyens d'acquisition 11, le signal de vitesse de rotation acquis. On comprend alors que, pour cette variante de réalisation, le module d'obtention MOD_OBT2 a pour fonction la mise en œuvre desdits traitements.

Rien n'exclut non plus d'envisager que chaque valeur $f_r[k]$ de la fréquence de rotation de l'arbre soit déterminée à partir d'un signal de vitesse de rotation de l'arbre déterminé autrement qu'au moyen d'un ou plusieurs capteurs de vitesse, par exemple directement à partir d'un signal de commande du moteur de l'aéronef. De cette manière, l'utilisation de tels capteurs de vitesse n'est pas requise et le module d'obtention MOD_OBT2 peut soit être utilisé pour recevoir les valeurs $f_r[k]$ de la fréquence de rotation de l'arbre une fois celles-ci déterminées à partir dudit signal de commande, ou bien encore pour déterminer lui-même lesdites valeurs $f_r[k]$ à partir dudit signal de commande qui lui est communiqué.

D'une manière générale, aucune limitation n'est attachée à la manière dont le dispositif de surveillance 12 peut obtenir une ou plusieurs valeurs de la fréquence de rotation de l'arbre.

Pour la suite de la description, et à des fins de simplification de celle-ci uniquement, on considère de manière nullement limitative que les composants mécaniques présents sur l'arbre correspondent à un engrenage formé de deux roues engrenées ainsi qu'à un roulement.

On considère en outre à titre purement illustratif que le procédé de surveillance, pour ce mode particulier, est mis en œuvre au cours d'un vol de l'aéronef, plus particulièrement au cours d'une phase de croisière.

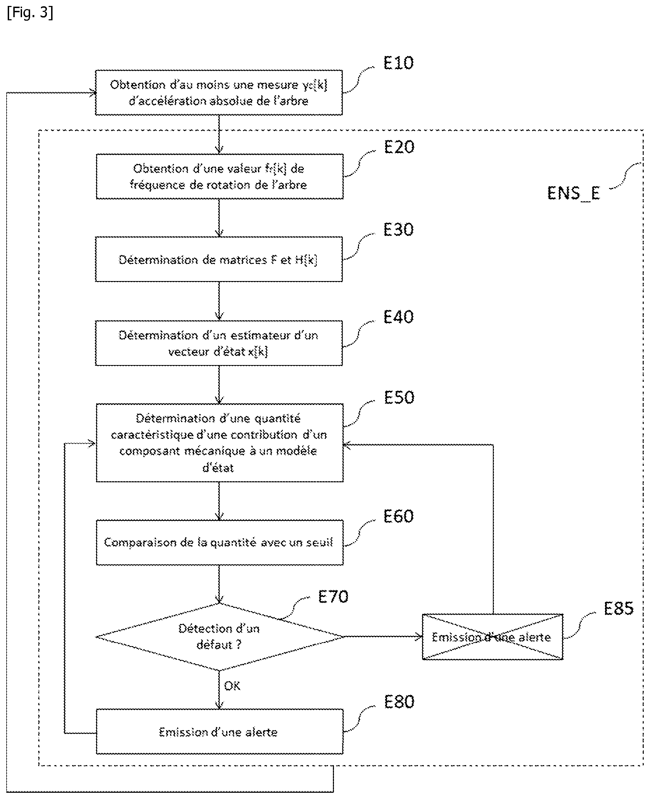

La figure 3 représente, sous forme d'ordinogramme, un mode particulier de mise en œuvre du procédé de surveillance selon l'invention. Les étapes dudit mode particulier de mise en œuvre sont exécutées par le dispositif de surveillance 12 de la figure 2.

Dans le présent mode de mise en œuvre, on considère que des mesures $y_c[k]$ d'accélération absolue de l'arbre sont acquises de manière récurrente, par exemple de manière périodique, par les moyens d'acquisition 11 et que chaque mesure $y_c[k]$ est transmise au dispositif de surveillance 12 immédiatement après son acquisition.

Tel qu'illustré par la figure 3, le procédé de surveillance comporte, pour chaque mesure $y_c[k]$ d'accélération absolue de l'arbre acquise par les moyens d'acquisition 11, une étape E10 d'obtention de ladite mesure mesure $y_c[k]$. Ladite étape E10 est mise en œuvre par le premier module d'obtention MOD_OBT1 équipant le dispositif de surveillance 12.

Dans le présent mode de mise en œuvre, le procédé de surveillance comporte également, après chaque obtention d'une mesure $y_c[k]$ d'accélération absolue, un ensemble ENS_E d'étapes.

La suite de la description vise à décrire les étapes comprises dans ledit ensemble ENS_E pour une mesure $y_c[k]$ d'accélération absolue préalablement acquise et obtenue suite à l'exécution de l'étape E10. Il est à noter que lesdites étapes de l'ensemble ENS_E sont destinées à être exécutées de manière itérative après chaque obtention, par le dispositif de surveillance 12, d'une mesure d'accélération absolue de l'arbre.

Tel qu'illustré par la figure 3, ledit ensemble ENS_E d'étapes comporte tout d'abord une étape E20 d'obtention d'une valeur $f_r[k]$ de la fréquence de rotation de l'arbre pour l'instant en lequel ladite mesure $y_c[k]$ a été préalablement acquise. Ladite étape E20 est mise en œuvre par le deuxième module d'obtention MOD_OBT2 équipant le dispositif de surveillance 12.

Comme mentionné auparavant, ladite valeur $f_r[k]$ de la fréquence de rotation de l'arbre est déterminée par les moyens d'acquisition en correspondance avec ladite mesure $y_c[k]$ (la correspondance portant ici sur l'instant d'acquisition de ladite mesure $y_c[k]$), de sorte que l'obtention faisant l'objet de l'étape E20 fait référence, dans le présent mode de mise en œuvre, à une transmission de données entre les moyens d'acquisition 11 et le dispositif de surveillance 12.

Il est à noter que les étapes E10 et E20 sont décrites dans le présent mode de mise en œuvre comme étant exécutées l'une à la suite de l'autre. Bien entendu, il ne s'agit là que d'une mise en œuvre optionnelle, et rien n'exclut d'envisager que ces étapes E10 et E20 soient exécutées en parallèle.

Une fois la valeur $f_r[k]$ de la fréquence de rotation de l'arbre obtenue, l'ensemble ENS_E d'étapes comporte également une étape E30 de détermination d'une matrice H[k] permettant de définir ledit modèle d'état. Ladite étape E30 est mise en œuvre par le premier module de détermination MOD_DET1 équipant le dispositif de surveillance 12.

La matrice H[k] décrit les variations de signatures d'état de santé des composants mécaniques placés sur l'arbre tournant, lesdites signatures d'état de santé étant contenues implicitement dans le vecteur d'état du modèle d'état comme cela est détaillé ultérieurement.

Il est à noter que le modèle d'état selon l'invention ne porte pas uniquement sur le signal d'accélération $y_c$, mais également sur le signal SE qui correspond à l'espérance du produit entre ledit signal $y_c$ et la valeur conjuguée dudit signal $y_c$ (de manière équivalente, le signal SE correspond au carré de l'enveloppe du signal acquis $y_c$). Ainsi, le modèle d'état peut être vu comme une modélisation dynamique d'un signal « augmenté » correspondant au regroupement, sous la forme d'un vecteur noté ici Y, d'échantillons du signal d'accélération $y_c$ et dudit signal SE. Le fait de considérer un tel modèle d'état permet avantageusement de surveiller simultanément l'état de santé des engrenages et des roulements.

Le procédé de surveillance proposé par l'invention repose donc sur l'utilisation du modèle d'état qui permet de représenter (modéliser) les contributions respectives des composants mécaniques de la ligne d'arbre aux vibrations subies par l'arbre tournant lors du fonctionnement de la machine tournante.

Plus particulièrement, les contributions associées aux composants mécaniques de type engrenages se font au niveau de la composante $y_c[k]$ du vecteur Y[k], alors que les contributions associées aux composants de type roulements se font au niveau de la composante SE[k] dudit vecteur Y[k]. Dit encore autrement, le vecteur Y[k] forme une représentation de la cinématique des composants mécaniques dont il convient de surveiller l'état.

Une telle approche de modélisation du comportement vibratoire de l'arbre, et donc a fortiori des composants mécaniques qui l'équipent, permet avantageusement de réaliser ladite surveillance quelle que soit la vitesse de rotation de l'arbre. Il est en outre indépendant du régime de fonctionnement de la machine tournante, et peut donc être mis en œuvre dans le cas d'un régime variable.

On décrit ici maintenant, de manière détaillée, un exemple de détermination de ladite matrice H[k]. A cet effet, on note tout d'abord que le signal vibratoire, noté $y_c$, fourni par un capteur d'accélération peut se décomposer selon l'expression ci-dessous :

$$y_c[k] = y_r[k] + y_g[k] + b[k]$$

expression dans laquelle $y_r$ est le signal vibratoire généré par le roulement, dit « signal de roulement », $y_g$ est le signal généré par le contact entre roues d'engrenages, dit « signal d'engrènement », et b est le bruit de mesure qui représente les vibrations provenant d'autres organes du moteur.

Le signal d'engrènement $y_g$ peut s'écrire de la manière suivante :

$$y_g[k] = \sum_{m=1}^{M} a_m[k]e^{j(\theta_m[k]+\phi_m[k])}$$

expression dans laquelle :

- M est le nombre d'harmonique des composantes (fréquences) d'engrènement. Ledit nombre M est préalablement déterminé ;
- $a_m[k]$ et $\Phi_m[k]$ sont respectivement les modulations d'amplitude et de phase de la m-ième composante d'engrènement ;
- $\theta_m[k]$ est la phase instantanée de l'engrènement de la m-ième composante d'engrènement et s'écrit :

$$\theta_m[k] = 2\pi t_e \times Z \times m \sum_{j=1}^{K} f_r[j]$$

où $f_r$ est la fréquence de rotation de l'arbre, Z est l'ordre cyclique de la fréquence d'engrènement (i.e. le rapport entre la fréquence de contact entre deux dents des roues d'engrenage et celle de l'arbre tournant), $t_e$ est la période d'échantillonnage (i.e. l'inverse de la fréquence d'échantillonnage $f_e$).

Etant donnée l'expression analytique du signal d'engrènement $y_g$, le signal vibratoire $y_c$ peut encore s'écrire de la manière suivante :

$$y_c[k] = \sum_{m=1}^{M} \tilde{a}_m[k]e^{j\theta_m[k]} + v_1[k]$$

avec $\tilde{a}_m[k] = a_m[k]e^{j\phi_m[k]}$ qui correspond à l'enveloppe complexe de la porteuse $e^{j\theta_m[k]}$ et $v_1$ qui correspond au bruit de mesure contenant le signal vibratoire des roulements et celui des autres parties du système. L'enveloppe complexe $\tilde{a}_m[k]$ est caractéristique de l'état des roues de l'engrenage. Le diagnostic de ce dernier revient donc à estimer et analyser cette enveloppe complexe $\tilde{a}_m[k]$.

La présence d'un défaut sur l'une des roues d'un engrenage se manifeste par une périodicité de l'enveloppe complexe. Cette périodicité est égale à celle de la rotation de la roue défectueuse. D'un point de vue analytique, l'enveloppe complexe $\tilde{a}_m[k]$ peut être approchée par une série de Fourier. En définissant $\theta_r[k]$ comme étant égal au rapport entre $\theta_m[k]$ et la quantité Z x m ($\theta_r[k]$ correspond ainsi au déplacement angulaire de l'arbre tournant), l'enveloppe complexe $\tilde{a}_m[k]$ peut s'écrire de la manière suivante :

$$\begin{aligned} \tilde{a}_m[k] &= \sum_{n=-N_b}^{N_b} \alpha_{m,n}[k]e^{jno_{r1}\theta_r[k]} + \beta_{m,n}[k]e^{jno_{r2}\theta_r[k]} \\ &= b^T[k]p_m[k] \end{aligned}$$

expression dans laquelle :

- $N_b$ est le nombre maximal de raies (bandes) latérales autour des fréquences d'engrènement. ledit nombre $N_b$ est préalablement déterminé ;
- $o_{r1}$ et $o_{r2}$ sont respectivement les ordres cycliques de la fréquence de rotation de la première et de la deuxième roue de l'engrenage ;
- $\alpha_{n,m}$ et $\beta_{n,m}$ sont les coefficients de Fourier ;
- b[k] est un vecteur pouvant s'écrire :

$$b[k] = (b_{r1}^T[k] \quad b_{r2}^T[k])^T \in \mathbb{C}^{2(2N_b+1)\times 1}$$

où $b_{r1}[k]$ est égal à $\left(e^{-jN_b o_{r1}\theta_r[k]} \quad \cdots \quad e^{-jo_{r1}\theta_r[k]} \; 1 \; e^{jo_{r1}\theta_r[k]} \quad \cdots \quad e^{jN_b o_{r1}\theta_r[k]}\right)^T \in \mathbb{C}^{(2N_b+1)\times 1}$ et $b_{r2}[k]$ est

égal à $\left(e^{-jN_b o_{r2}\theta_r[k]} \quad \cdots \quad e^{-jo_{r2}\theta_r[k]} \; 1 \; e^{jo_{r2}\theta_r[k]} \quad \cdots \quad e^{jN_b o_{r2}\theta_r[k]}\right)^T \in \mathbb{C}^{(2N_b+1)\times 1}$ ;

- $p_m[k]$ est un vecteur pouvant s'écrire :

$$p_m[k] = (p_{m,r1}^T \quad p_{m,r2}^T)^T \in \mathbb{C}^{2(2N_b+1)\times 1}$$

où $p_{m,r1}[k]$ est égal à $(\alpha_{m,-N_b} \quad \cdots \quad \alpha_{m,N_b})^T \in \mathbb{C}^{(2N_b+1)\times 1}$ et $p_{m,r2}[k]$ est égal à $(\beta_{m,-N_b} \quad \cdots \quad \beta_{m,N_b})^T \in \mathbb{C}^{(2N_b+1)\times 1}$ .

Il en résulte que le signal vibratoire $y_c$ admet l'expression suivante :

$$\begin{aligned} y_c[k] &= \sum_{m=1}^{M} b^T[k]p_m[k]e^{j\theta_m[k]} + v_1[k] \\ &= c_e^T[k]x_e[k] + v_1[k] \end{aligned}$$

expression dans laquelle :

- $c_e[k]$ est égal à $(b^T[k]e^{j\theta_1[k]} \quad \cdots \quad b^T[k]e^{j\theta_M[k]})^T \in \mathbb{C}^{2M(2N_b+1)\times 1}$ . Il s'agit du vecteur des porteuses ;

- $x_e[k]$ est égal à $(p_1^T[k] \quad \cdots \quad p_M^T[k])^T \in \mathbb{C}^{2M(2N_b+1)\times 1}$ . Il s'agit du vecteur qui contient les coefficients de la série de Fourier approchant l'enveloppe complexe $\tilde{a}_m[k]$ du signal d'engrènement $y_g$.

L'estimation de l'enveloppe complexe $\tilde{a}_m[k]$ est réduite à l'estimation de ses coefficients de Fourier contenus dans la variable $x_e$. Cette estimation est faite en tenant compte de la possible variation des coefficients de Fourier en régime variable. Ainsi, dans cet exemple de mise en œuvre, il est supposé que les coefficients de Fourier, et donc la variable $x_e$, varient selon une marche aléatoire donnée par l'expression suivante :

$$x_e[k+1] = x_e[k] + w_e[k]$$

expression dans laquelle $w_e[k]$ est un signal aléatoire de nature statistique quelconque.

En définitive, les relations données ci-avant pour $y_c[k]$ et $x_e[k]$ forment le modèle du signal d'engrènement. Grâce à ce modèle, la surveillance temps réel de l'engrenage se réduit à estimer les coefficients de Fourier de l'enveloppe complexe $\tilde{a}_m[k]$ du signal d'engrènement $y_g$.

Il a été discuté jusqu'à présent du modèle analytique du signal d'engrènement $y_g$. Aussi, on présente désormais un modèle analytique du signal de roulement $y_r$, de sorte à pouvoir finalement donner un modèle analytique du signal SE[k] puis exprimer la matrice H[k] qui forment le modèle d'état selon l'invention.

La vibration générée par le roulement placé sur l'arbre peut s'écrire selon l'expression suivante :

$$y_r[k] = \kappa(\omega[k])M[k]\sum_{i=1}^{d} A_i I[k - [T_i f_e]]$$

expression dans laquelle :

- M[k] est la fonction de distribution de la charge lorsque la bague interne du roulement est soumise à une charge radiale. Dans des conditions stationnaires, il est connu que cette fonction de distribution est périodique, de période égale à celle de la rotation de l'arbre de référence. Pour plus de détails concernant ces aspects, l'homme du métier peut par exemple se référer au document : « Cyclic spectral analysis of rolling-element bearing signals: Facts and fictions », J. Antoni, Journal of Sound and Vibration 304, 2007, 497-529 ;
- $\kappa(\omega[k])$ est une fonction de modulation qui dépend de la vitesse angulaire $\omega$ de l'arbre ;
- $A_i$ est l'amplitude du i-ième impact. Elle a une distribution Gaussienne comprise entre 0 et 1 telle que $A_i = A + \delta A_i$. $A$ est la moyenne de la distribution et $\delta A_i$ est la partie aléatoire ;
- I est la réponse impulsionnelle de la structure du roulement ;

- [x] désigne la partie entière du nombre décimal x ;
- d est le nombre d'impact résultant d'un éventuel défaut de roulement ;
- $T_i$ est l'instant d'apparition du i-ième impact tel que $T_i = t(i\theta_d + \delta\theta_i)$. $\theta_d$ est la période angulaire dudit éventuel défaut de roulement et $\delta\theta_i$ est une distribution Gaussienne centrée.

Le carré de l'enveloppe du signal de vibration $y_c$, autrement dit le signal SE[k], est quant à lui donné par l'expression suivante :

$$\begin{aligned} SE[k] &= \mathbb{E}\{y_c[k]\bar{y}_c[k]\} \\ &= \mathbb{E}\{(y_r[k] + y_g[k] + b[k])(\bar{y}_r[k] + \bar{y}_g[k] + \bar{b}[k])\} \end{aligned}$$

où la notation $\bar{a}$ indique le conjugué du nombre complexe $a$ et $\mathbb{E}\{.\}$ désigne l'espérance mathématique.

Dans le présent exemple de mise en œuvre, il est supposé que le signal d'engrènement $y_g$, le signal de roulement $y_r$ et le bruit b sont mutuellement non corrélés. Par conséquent, le carré de l'enveloppe devient :

$$SE[k] = \mathbb{E}\{y_r[k]\bar{y}_r[k]\} + n_2[k]$$

expression dans laquelle $n_2[k]$ est égal à $\mathbb{E}\{y_g[k]\bar{y}_g[k]\} + \mathbb{E}\{b[k]\bar{b}[k]\}$ qui est considéré comme un bruit de nature statistique quelconque.

La présence d'un défaut sur le roulement se manifeste par par le fait que le signal de roulement $y_r$ est cyclique ainsi que sa fonction d'autocorrélation. Par conséquent, le signal SE[k] est cyclique et entaché par le bruit $n_2[k]$. A partir de ce constat, le signal SE[k] peut être approché par une série de Fourier et s'écrire selon l'expression :

$$SE[k] = \sum_{z=1}^{l} \mu_z[k] \cos(z\theta_d[k] + \Phi_z[k]) + v_2[k]$$

expression dans laquelle :

- $\mu_z[k]$ et $\Phi_z[k]$ sont respectivement l'amplitude et la phase de la z-ième composante de la série de Fourier ;
- l désigne le nombre de raies liées au défaut de roulement (l représente le nombre d'harmoniques d'intérêt dans le carré de l'enveloppe du signal d'accélération $y_c$ pour la surveillance des différents composants du roulement). Ledit nombre l est préalablement déterminé,
- $v_2$ est un bruit de nature statistique quelconque et comprenant le bruit $n_2$ et éventuellement une partie des raies liées au défaut de roulement lorsque l est très inférieure au nombre de raies significatives liées au défaut de roulement.

Par une transformation trigonométrique, le signal SE[k] peut finalement s'écrire :

$$SE[k] = \sum_{z=1}^{l} h_z^T[k]x_z[k] + v_2[k]$$

expression dans laquelle :

- $h_z[k]$ est égal à $(\cos(z\theta_d[k]) \quad \sin(z\theta_d[k]))^T \in \mathbb{R}^{2\times1}$ ;
- $x_z[k]$ est égal à $(\mu_z[k]\cos(\Phi_z[k]) \quad \mu_z[k]\sin(\Phi_z[k]))^T \in \mathbb{R}^{2\times1}$.

En regroupant les composantes de la série de Fourier, Il en résulte que le signal SE[k] le peut se mettre sous la forme suivante :

$$SE[k] = c_r^T[k]x_r[k] + v_2[k]$$

expression dans laquelle :

- $c_r[k]$ est égal à $(h_1^T[k] \quad \cdots \quad h_l^T[k])^T \in \mathbb{R}^{2l \times 1}$ ;

- $x_r[k]$ est égal à $(x_1[k] \quad \cdots \quad x_l[k])^T \in \mathbb{R}^{2l \times 1}$ .

De la même manière que pour la modélisation analytique du modèle du signal d'engrènement $y_g$, il est considéré, dans le présent exemple de mise en œuvre, que les coefficients de la série de Fourier approchant le signal SE[k] suivent une marche aléatoire, de sorte que :

$$x_r[k+1] = x_r[k] + w_r[k]$$

expression dans laquelle $w_r[k]$ est un bruit aléatoire à énergie finie.

A partir des développements précédents, il est désormais possible d'exprimer le modèle d'état selon l'expression suivante :

$$\underbrace{\begin{bmatrix} y_c[k] \\ SE[k] \end{bmatrix}}_{Y[k]} = \underbrace{\begin{bmatrix} c_e^T[k] & o_{1 \times 2l} \\ o_{1 \times 2MN_b} & c_r^T[k] \end{bmatrix}}_{H[k]} \underbrace{\begin{bmatrix} x_e[k] \\ x_r[k] \end{bmatrix}}_{x[k]} + \underbrace{\begin{bmatrix} v_1[k] \\ v_2[k] \end{bmatrix}}_{v[k]}$$

expression dans laquelle :

- $v[k]$ est un bruit associé à ladite mesure $y_c[k]$ ;
- $x[k]$ est un vecteur, dit « vecteur d'état », comportant, pour chaque composant mécanique, un sous-vecteur ($x_e[k]$ ou $x_r[k]$) dont les composantes sont représentatives d'une contribution dudit composant mécanique au vecteur Y[k]. On note que le vecteur d'état x contient les inconnus du modèle d'état.

Il est également possible d'exprimer le vecteur d'état x de la manière suivante à partir des développements précédents :

$$\underbrace{\begin{bmatrix} x_e[k+1] \\ x_r[k+1] \end{bmatrix}}_{x[k+1]} = \underbrace{\begin{bmatrix} I_{2MN_b \times 2MN_b} & o_{2MN_b \times 2l} \\ o_{2l \times 2MN_b} & I_{2l \times 2l} \end{bmatrix}}_{F} \underbrace{\begin{bmatrix} x_e[k] \\ x_r[k] \end{bmatrix}}_{x[k]} + \underbrace{\begin{bmatrix} w_e[k] \\ w_r[k] \end{bmatrix}}_{w[k]}$$

expression dans laquelle $w[k]$ est le bruit d'état du modèle, et F représente une matrice identité.

Les expressions de $y[k]$ et $x[k+1]$ représentent le modèle d'état augmenté du signal vibratoire $y_c$. L'estimation des paramètres de ce modèle d'état, et par conséquent celle des quantités caractéristiques de l'état du roulement et des roues d'engrenage, peut être déterminée à partir de ces expressions.

En définitive, une fois ladite matrice H[k] déterminées, le procédé de surveillance comporte une <u>étape E40</u> de détermination d'un estimateur du vecteur x[k] à partir de ladite matrice H[k]. Ladite étape E40 est mise en œuvre par le deuxième module de détermination MOD_DET2 équipant le dispositif de surveillance 12.

Selon un exemple particulier de mise en œuvre, l'estimateur du vecteur x[k] est déterminé au moyen d'un algorithme d'optimisation minimax. Plus particulièrement, en partant de l'expression du vecteur d'état x décrite auparavant, un estimateur minimax est mis en œuvre pour une combinaison linéaire de la variable d'état, notée $\hat{s}[k]$, et définie comme suit :

$$\hat{s}[k] = H[k]\,\hat{x}[k]$$

expression dans laquelle $\hat{x}[k]$ est l'estimation robuste du vecteur d'état x[k]. Ladite estimation $\hat{x}[k]$ satisfait l'équation récursive suivante :

$$\hat{x}[k] = \hat{x}[k-1] + g[k](y[k-1] - H[k-1]\hat{x}[k-1])$$

expression dans laquelle $g[k]$ correspond au gain de l'estimateur.

En notant $e[k]$ l'erreur d'estimation (i.e. $e[k] = s[k] - \hat{s}[k]$), le gain de l'estimateur minimax peut alors être déterminé en minimisant la fonction coût quadratique J suivante :

$$J = e^T[1]P^{-1}[1]e[1] + \sum_{k=1}^{n} (w^T[k]Q^{-1}w[k] + v^T[k]R^{-1}v[k]) - \gamma \sum_{k=1}^{n} e^T[k]e[k]$$

expression dans laquelle la fonction J est strictement positive et P[1], Q et R sont des matrices de pondération diagonales positives respectivement pour l'erreur d'initialisation e[1], le bruit d'état w[k] et le bruit de mesure v[k] (de telles matrices, et plus particulièrement leurs paramétrages respectifs, sont connus de l'homme du métier). Dans le présent exemple de mise en œuvre, ladite fonction coût J est minimisée pour le pire des cas possibles, ce qui revient à minimiser J par rapport à $\hat{s}[k]$ et à maximiser J par rapport à e[1], w[k] et v[k]. Cela conduit à une optimisation minimax formulée de la manière suivante :

$$\{\hat{s}[k]\}_{k=1}^{n} = \arg\left(\min_{\hat{s}} \max_{e[1],w,v} J\right)$$

Un tel problème d'optimisation peut être résolu par une approche du multiplicateur de Lagrange, de sorte à obtenir l'expression suivante pour le gain g[k] :

$$g[k] = P[k]\Gamma[k-1]H^T[k]R^{-1}$$

expression dans laquelle :

- P est une matrice définie symétrique positive qui satisfait l'équation de Riccati suivante :

$$P[k] = P[k-1]\Gamma[k-1] + Q$$

- $\Gamma[k]$ est donnée par l'expression suivante :

$$\Gamma[k] = \left(I_{(2MN_b+2l)\times(2MN_b+2l)} - \gamma H^T[k]H[k]P[k] + H[k]R^{-1}H^T[k]P[k]\right)^{-1}$$

où y est strictement inférieur à Sup $R^{-1}$ (« Sup » définit le supremum de l'inverse de la matrice de pondération R).

Pour plus de détails concernant l'optimisation minimax formulée dans cet exemple de mis en œuvre et l'obtention du gain g[k], l'homme du métier peut se référer au document « Discrete H-infinity filter design with application to speech enhancement », Shen, X., ICASSP, vol 2, page 1504 - 1507, 1995.

Il importe de noter que rien n'exclut d'envisager, suivant d'autres exemples de mise en œuvre de l'étape E40 du procédé de surveillance, une détermination dudit estimateur au moyen d'un algorithme autre que ledit algorithme d'optimisation minimax. Par exemple, un algorithme d'optimisation de moindres carrés peut être utilisé.

Une fois l'estimateur du vecteur x[k] déterminé, il est possible de détecter un éventuel défaut de chacun des composants mécaniques placés sur l'arbre du moteur de l'aéronef. A cet effet, dans le mode de mise en œuvre de la figure 3, l'ensemble ENS_E d'étapes comporte, pour chacun desdits composants mécaniques, une pluralité d'étapes.

Pour mémoire, les composants mécaniques agencés sur l'arbre comportent, dans le présent mode de mise en œuvre, un roulement et un engrenage formé de deux roues engrenées. Aussi, pour la suite de la description, ladite pluralité d'étapes de l'ensemble ENS_E est dans un premier temps exécutée et décrite pour ledit roulement. On comprend néanmoins qu'il s'agit là d'un choix purement arbitraire, et que ladite pluralité d'étapes pourrait tout aussi bien être exécutée dans un premier temps pour ledit engrenage.

Tel qu'illustré par la figure 3, ladite pluralité d'étapes comporte, dans un premier temps, une étape E50 de détermination, à partir dudit estimateur du vecteur x[k], d'une quantité Q_R caractéristique de la contribution dudit roulement au vecteur Y[k]. Ladite étape E50 est mise en œuvre par le troisième module de détermination MOD_DET3 équipant le dispositif de surveillance 12.

Ladite quantité Q_R caractérise plus particulièrement l'état de santé dudit roulement. Elle est obtenue à partir de ladite contribution du roulement, autrement dit, en reprenant l'exemple de mise en œuvre décrit ci-avant pour l'étape E30, à partir du sous-vecteur $x_r[k]$ compris dans le vecteur d'état x[k]. Dans le présent exemple de mise en œuvre, ladite contribution du roulement correspond à une estimation du signal SE[k]. On note qu'une telle estimation est accessible grâce à l'estimateur du vecteur d'état x[k] précédemment obtenu (étape E40), et qui fournit a fortiori également un estimateur dudit sous-vecteur $x_r[k]$, de sorte qu'il est possible de déterminer ladite quantité Q_R.

A titre d'exemple nullement limitatif, ladite quantité Q_R est représentative d'une énergie du signal SE[k].

Rien n'exclut toutefois d'envisager une quantité Q_R d'un autre type, comme par exemple une phase ou une énergie de ladite contribution du roulement.

Ladite pluralité d'étapes comporte également une étape E60 de comparaison de ladite quantité Q_R déterminée pour ledit roulement avec un seuil S_R, de sorte à obtenir un résultat de comparaison. Ladite étape E60 est mise en œuvre par le module de comparaison MOD_COMP équipant le dispositif de surveillance 12.

En pratique, ledit résultat de comparaison correspond à une donnée d'information indiquant si la quantité Q_R est supérieure ou inférieure audit seuil S_R, et à partir duquel il est possible de détecter un éventuel défaut du roulement.

On note que le seuil S_R peut par exemple être déterminé par un expert et enregistré dans des moyens de mémorisation du dispositif de surveillance 12 (par exemple dans la mémoire non volatile 4), ou bien, selon un autre exemple, correspondre à une quantité Q_R déterminée lors d'une précédente mise en œuvre du procédé de surveillance selon l'invention et dans laquelle aucun défaut du roulement n'a été détecté.

A cet effet, ladite pluralité d'étapes de l'ensemble ENS_E comporte également une étape E70 de détection d'un éventuel défaut du roulement en fonction du résultat de comparaison obtenu suite à la mise en œuvre de l'étape E60. Ladite étape E70 est mise en œuvre par le module de détection MOD_DETECT équipant le dispositif de surveillance 12.

Ainsi, dans le présent mode de mise en œuvre, un défaut du roulement (respectivement une absence de défaut du roulement) est détecté si la quantité Q_R est supérieure (respectivement inférieure) au seuil S_R. Une telle détection s'appuie ici sur une comparaison entre des quantités numériques (quantités Q_R et S_R). Autrement dit, à ce stade du procédé de surveillance, l'information selon laquelle l'état de santé du roulement n'est éventuellement pas conforme correspond à une information numérique, typiquement encodée sous forme de bits.

Aussi, dans le présent mode de mise en œuvre, ladite pluralité d'étapes de l'ensemble ENS_E comporte en outre une étape E80 d'émission d'une alerte si un défaut du roulement est détecté. Ladite étape E80 est mise en œuvre par le module d'alerte MOD_ALERT équipant le dispositif de surveillance 12.

Ladite alerte correspond par exemple à un signal sonore, à un signal lumineux, etc., ce signal pouvant être transmis à un opérateur au sol en charge de la maintenance de l'aéronef et/ou au cockpit de l'aéronef afin d'alerter le personnel naviguant.

La communication avec l'utilisateur (opérateur au sol ou personnel naviguant par exemple) sur l'état du système 10 de surveillance peut d'ailleurs s'effectuer sous la forme d'un graphique projeté par des moyens d'affichage dédiés à cet effet (écran par exemple).

On note que si aucun défaut n'est détecté, alors, bien entendu, aucune alerte n'est émise (étape E85 sur la figure 3).

Par la suite, les étapes E50 à E70, ainsi que E80 ou E85, sont itérées pour l'engrenage agencé sur l'arbre. A cet effet, il est déterminé une quantité Q_E caractéristique de la contribution dudit engrenage au vecteur Y[k] (il s'agit, dans le présent exemple de mise en œuvre, de l'amplitude ou de la phase ou de l'énergie de l'enveloppe complexe $\tilde{a}_m[k]$), cette quantité Q_E étant ensuite comparée à un seuil S_E pour détecter un éventuel défaut de l'engrenage.

Bien que les étapes E50 à E70, ainsi que E80 ou E85, aient été décrites jusqu'à présent comme étant mises en œuvre successivement pour chacun des composants mécaniques agencés sur l'arbre, il n'en reste pas moins que l'invention couvre également le cas où ces étapes sont mises en œuvre de manière parallèle pour chacun desdits composants.

En outre, s'il est considéré dans le mode de mise en œuvre de la figure 3 que les étapes E50 à E70, ainsi que E80 ou E85, sont exécutées pour tous les composants mécaniques agencés sur l'arbre, il est également possible d'envisager d'autres modes de mise en œuvre dans lesquels seule une partie desdits composants mécaniques est concernée par ces étapes.

L'invention a été décrite jusqu'à présent en considérant que le dispositif de surveillance 12 est agencé dans l'aéronef. Rien n'exclut cependant d'envisager que celui-ci soit disposé au sol et qu'il communique avec les moyens d'acquisition agencés dans l'aéronef au moyen de tout protocole connu de l'homme du métier.

En outre, le procédé de surveillance a également été décrit en considérant un mode de mise en œuvre dans lequel les étapes de l'ensemble ENS_E sont exécutées après chaque réception, par le dispositif de surveillance 12, d'une mesure d'accélération absolue $y_c[k]$. Le procédé de surveillance reste néanmoins applicable dans le cas où le dispositif de surveillance mémorise une pluralité de mesures d'accélération absolue (après leur réception en provenance des moyens d'acquisition 11), puis seulement ensuite met en œuvre les étapes de l'ensemble ENS_E pour chacune des mesures ainsi mémorisées.

Le procédé de surveillance a aussi été décrit en considérant un mode de mise en œuvre dans lequel une alerte est émise si un défaut est détecté. Rien n'exclut cependant d'envisager qu'aucune alerte ne soit émise par le dispositif de surveillance 12, mais que les résultats de détection soient analysés (en temps réel ou de manière différée) par un expert qui peut dès lors décider s'il y a lieu de valider ou non une détection de défaut réalisée par le dispositif de surveillance 12.

On note également que si le mode de mise en œuvre de la figure 3 n'inclut pas l'acquisition en tant que tel de mesures utiles à la surveillance de l'état de santé des composants mécaniques placés sur l'arbre, il n'en reste pas moins possible d'envisager d'autres modes dans lesquels des mesures peuvent être acquises au cours d'une ou plusieurs étapes (étape d'acquisition d'au moins une mesure $y_c[k]$ et/ou étape d'acquisition d'une vitesse de rotation $v_r[k']$ par exemple) dudit procédé de surveillance. Dans ce cas, le procédé de surveillance est mis en œuvre non plus par le seul dispositif de surveillance 12, mais aussi par tout ou partie desdits moyens d'acquisition 11.

Enfin, il convient de noter que, de manière plus générale, la mise en œuvre de la présente invention ne se réduit pas au seul domaine de l'aéronautique. Elle reste en effet applicable pour tout type de machine tournante, indépendamment du domaine technique concerné, comme par exemple les moteurs électriques, les moteurs de transmission de puissance, les actionneurs électromécaniques, les éoliennes, les essieux de trains, etc.

## Revendications

1. Procédé de surveillance de l'état de composants mécaniques de type roulements et engrenages sur une ligne d'arbre équipant une machine tournante, ledit procédé étant mis en œuvre par ordinateur et comportant une étape d'obtention (E10) d'au moins une mesure $y_c[k]$, k étant un indice entier, d'accélération absolue de l'arbre dans un repère fixe lié à la machine tournante, ainsi qu'un ensemble (ENS_E) d'étapes de :

   - obtention (E20) d'une valeur $f_r[k]$ de la fréquence de rotation de l'arbre pour un instant en lequel ladite au moins une mesure $y_c[k]$ a été préalablement acquise,
   - détermination (E30) d'une matrice H[k] permettant de définir un modèle d'état décrit par :

$$x[k+1] = x[k] + w[k] \qquad et \qquad Y[k] = \begin{bmatrix} y_c[k] \\ SE[k] \end{bmatrix} = H[k] \times x[k] + v[k]$$

   où w[k] est un bruit aléatoire et v[k] est un bruit associé à ladite au moins une mesure $y_c[k]$, H[k] est définie à partir de la valeur $f_r[k]$, SE[k] est égal à l'espérance du produit entre $y_c[k]$ et la valeur conjuguée de $y_c[k]$, x[k] est un vecteur comportant, pour chaque composant mécanique, un sous-vecteur dont les composantes sont représentatives d'une contribution dudit composant mécanique au vecteur Y[k],
   - détermination (E40) d'un estimateur du vecteur x[k] à partir de ladite matrice H[k], ledit ensemble d'étapes comportant en outre, pour au moins un composant mécanique, des étapes de :

      - détermination (E50), à partir dudit estimateur, d'une quantité caractéristique de ladite contribution associée audit composant mécanique,
      - détection (E70) d'un éventuel défaut dudit au moins un composant mécanique en fonction d'une comparaison (E60) de ladite quantité avec un seuil.

2. Procédé selon la revendication 1, dans lequel l'estimateur du vecteur x[k] est déterminé au moyen d'un algorithme d'optimisation minimax ou d'un algorithme d'optimisation de moindres carrés.

3. Procédé selon l'une quelconque des revendications 1 à 2, dans lequel ladite quantité est représentative d'une amplitude ou d'une phase ou d'une énergie de ladite contribution.

4. Procédé selon l'une quelconque des revendications 1 à 3, ledit procédé comportant en outre, si un défaut est détecté, une étape d'émission (E80) d'une alerte.

5. Procédé selon l'une quelconque des revendications 1 à 4, dans lequel une pluralité de mesures d'accélération absolue est obtenue de manière récurrente, ledit ensemble (ENS_E) d'étapes étant mis en œuvre après chaque obtention d'une mesure d'accélération absolue.

6. Programme d'ordinateur comportant des instructions pour la mise en œuvre d'un procédé de surveillance selon l'une quelconque des revendications 1 à 5 lorsque ledit programme d'ordinateur est exécuté par un ordinateur.

7. Support d'enregistrement lisible par un ordinateur sur lequel est enregistré un programme d'ordinateur selon la revendication 6.

8. Dispositif de surveillance (12) de l'état de composants mécaniques de type roulements et engrenages sur une ligne d'arbre équipant une machine tournante, ledit dispositif de traitement comportant :

- un premier module d'obtention (MOD_OBT1) configuré pour obtenir au moins une mesure $y_c[k]$, k étant un indice entier, d'accélération absolue de l'arbre dans un repère fixe lié à la machine tournante,
- un deuxième module d'obtention (MOD_OBT2) configuré pour obtenir une valeur $f_r[k]$ de la fréquence de rotation de l'arbre pour un instant en lequel ladite au moins une mesure $y_c[k]$ a été acquise,
- un premier module de détermination (MOD_DET1) configuré pour déterminer une matrice H[k] permettant de définir un modèle d'état décrit par :

$$x[k + 1] = x[k] + w[k] \qquad et \qquad Y[k] = \begin{bmatrix} y_c[k] \\ SE[k] \end{bmatrix} = H[k] \times x[k] + v[k]$$

où w[k] est un bruit aléatoire et v[k] est un bruit associé à ladite au moins une mesure $y_c[k]$, H[k] est définie en fonction de la valeur $f_r[k]$, SE[k] est égal à l'espérance du produit entre $y_c[k]$ et la valeur conjuguée de $y_c[k]$, x[k] est un vecteur comportant, pour chaque composant mécanique, un sous-vecteur dont les composantes sont représentatives de la contribution dudit composant mécanique au vecteur Y[k],
- un deuxième module de détermination (MOD_DET2) configuré pour déterminé un estimateur du vecteur x[k] à partir de ladite matrice H[k],
- un troisième module de détermination (MOD_DET3) configuré pour déterminer, à partir dudit estimateur, au moins une quantité caractéristique de ladite contribution associée à un composant mécanique,
- un module de comparaison (MOD_COMP) configuré pour comparer ladite au moins une quantité avec un seuil, de sorte à obtenir un résultat de comparaison,
- un module de détection (MOD_DETECT) configuré pour détecter un éventuel défaut dudit au moins un composant mécanique en fonction du résultat de comparaison.

9. Système de surveillance (10) de l'état de composants mécaniques de type roulements et engrenages sur une ligne d'arbre équipant une machine tournante, ledit système de surveillance comportant :

- des moyens d'acquisition (11) d'au moins une mesure $y_c[k]$, k étant un indice entier, d'accélération absolue de l'arbre dans un repère fixe lié à la machine tournante,
- un dispositif de surveillance (12) selon la revendication 8.

10. Aéronef comportant un système de surveillance (10) selon la revendication 9.

**Patentansprüche**

1. Verfahren zur Zustandsüberwachung von mechanischen Komponenten wie Lagern und Zahnrädern auf einer Wellenleitung, die eine rotierende Maschine ausstattet, wobei das Verfahren mit einem Computer ausgeführt wird, und umfassend einen Schritt zum Erhalten (E10) mindestens einer Messung $y_c[k]$, wobei k ein ganzzahliger Index ist, der die absolute Beschleunigung der Welle in einem festen Bezugssystem ist, das an der rotierenden Maschine angebracht ist, sowie eine Reihe (ENS_E) von Schritten zum:

- Erhalten (E20) eines Werts $f_r[k]$ der Rotationsfrequenz der Welle für einen Zeitpunkt, an dem die mindestens eine Messung $y_c[k]$ erfasst wurde,
- Bestimmen (E30) einer Matrix H[k], die ermöglicht, ein Zustandsmodell zu definieren, beschrieben durch:

$$x[k + 1] = x[k] + w[k] \quad und \qquad Y[k] = \begin{bmatrix} y_c[k] \\ SE[k] \end{bmatrix} = H[k] \times x[k] + v[k]$$

wobei w[k] ein Zufallsrauschen und v[k] ein Rauschen ist, das der mindestens einen Messung $y_c[k]$ zugewiesen ist; H[k] aus dem Wert $f_r[k]$ definiert ist; SE[k] gleich der Erwartung des Produkts zwischen $y_c[k]$ und dem konjugierten Wert von $y_c[k]$ ist, x[k] ein Vektor ist, der für jede mechanische Komponente einen Teilvektor umfasst, dessen Komponenten repräsentativ für einen Beitrag der mechanischen Komponente zum Vektor Y[k] sind,
- Bestimmen (E40) eines Schätzers des Vektors x[k] aus der Matrix H[k], wobei die Reihe von Schritten außerdem für mindestens eine mechanische Komponente die folgenden Schritte umfasst:
- Bestimmen (E50), aus dem Schätzer, einer charakteristischen Größe des Beitrags, der der mechanischen Komponente zugewiesen ist,
- Erkennen (E70) eines möglichen Fehlers der mindestens einen mechanischen Komponente in Abhängigkeit von einem Vergleich (E60) der Größe mit einem Schwellenwert.

2. Verfahren nach Anspruch 1, wobei der Schätzer des Vektors x[k] mit Hilfe eines Minimax-Optimierungsalgorithmus oder eines Least-Squares-Optimierungsalgorithmus bestimmt wird.

3. Verfahren nach einem der Ansprüche 1 bis 2, wobei die Größe repräsentativ für eine Amplitude oder eine Phase oder eine Energie des Beitrags ist.

4. Verfahren nach einem der Ansprüche 1 bis 3, wobei das Verfahren außerdem, wenn ein Fehler erkannt wird, einen Schritt des Ausgebens (E80) einer Warnung umfasst.

5. Verfahren nach einem der Ansprüche 1 bis 4, wobei eine Vielzahl von absoluten Beschleunigungsmessungen auf wiederholte Weise erhalten wird,wobei die Reihe (ENS_E) von Schritten nach jedem Erhalten einer absoluten Beschleunigungsmessung durchgeführt wird.

6. Computerprogramm, umfassend Anweisungen zur Ausführung eines Überwachungsverfahrens nach einem der Ansprüche 1 bis 5, wenn das Computerprogramm von einem Computer ausgeführt wird.

7. Computerlesbares Speichermedium, auf dem ein Computerprogramm nach Anspruch 6 aufgezeichnet ist.

8. Vorrichtung zur Zustandsüberwachung (12) von mechanischen Komponenten wie Lagern und Zahnrädern auf einer Wellenleitung, die eine rotierende Maschine ausstattet, wobei die Verarbeitungsvorrichtung Folgendes umfasst:

   - ein erstes Erfassungsmodul (MOD_OBT1), das konfiguriert ist, um mindestens einen Messwert $y_c$[k], wobei k ein ganzzahliger Index ist, der absoluten Beschleunigung der Welle in einem festen Bezugssystem zu erhalten, das an der rotierenden Maschine angebracht ist,
   - ein zweites Erfassungsmodul (MOD_OBT2), das konfiguriert ist, um einen Wert $f_r$[k] der Rotationsfrequenz der Welle für einen Zeitpunkt zu erhalten, an dem die mindestens eine Messung $y_c$[k] erfasst wurde,
   - ein erstes Bestimmungsmodul (MOD_DET1), das konfiguriert ist, um eine Matrix H[k] zu bestimmen, die ermöglicht, ein Zustandsmodell zu definieren, beschrieben durch:

$$x[k + 1] = x[k] + w[k] \quad und \quad Y[k] = \begin{bmatrix} y_c[k] \\ SE[k] \end{bmatrix} = H[k] \times x[k] + v[k]$$

   wobei w[k] ein Zufallsrauschen und v[k] ein Rauschen ist, das der mindestens einen Messung $y_c$[k] zugewiesen ist; H[k] in Abhängigkeit des Werts $f_r$[k] definiert ist; SE[k] gleich dem Erwartungswert des Produkts zwischen $y_c$[k] und dem konjugierten Wert von $y_c$[k] ist, x[k] ein Vektor ist, der für jede mechanische Komponente einen Teilvektor umfasst, dessen Komponenten repräsentativ für den Beitrag der mechanischen Komponente zum Vektor Y[k] sind,
   - ein zweites Bestimmungsmodul (MOD_DET2), das konfiguriert ist, um einen Schätzer des Vektors x[k] aus der Matrix H[k] zu bestimmen,
   - ein drittes Bestimmungsmodul (MOD_DET3), das konfiguriert ist, um aus dem Schätzer mindestens eine charakteristische Größe des Beitrags zu bestimmen, der einer mechanischen Komponente zugewiesen ist,
   - ein Vergleichsmodul (MOD_COMP), das konfiguriert ist, um die mindestens eine Größe mit einem Schwellenwert zu vergleichen, um ein Vergleichsergebnis zu erhalten,
   - ein Erkennungsmodul (MOD_DETECT), das konfiguriert ist, um einen möglichen Fehler der mindestens einen mechanischen Komponente in Abhängigkeit von Vergleichsergebnis das konfiguriert, um einen Schätzer zu erkennen.

9. System zur Zustandsüberwachung (10) von mechanischen Komponenten wie Lagern und Zahnrädern auf einer Wellenleitung, die eine rotierende Maschine ausstattet, wobei die System zur Überwachung Folgendes umfasst:

   - Mittel zum Erfassen (11) mindestens eines Messwerts $y_c$[k], wobei k ein ganzzahliger Index der absoluten Beschleunigung der Welle in einem festen Bezugssystem ist, das an der rotierenden Maschine angebracht ist,
   - eine Überwachungsvorrichtung (12) nach Anspruch 8.

10. Luftfahrzeug, umfassend ein Überwachungssystem (10) nach Anspruch 9.

**Claims**

1. A method for monitoring the state of mechanical components such as bearings and gears on a line shaft equipping a rotating machine, said method being implemented by computer and including a step of obtaining (E10) at least one measurement $y_c[k]$, k being an integer index, of absolute acceleration of the shaft in a fixed reference frame linked to the rotating machine, as well as a set (ENS_E) of steps of:

   - obtaining (E20) a value $f_r[k]$ of the rotation frequency of the shaft for a moment wherein said at least one measurement $y_c[k]$ has been previously acquired,
   - determining (E30) a matrix H[k] allowing to define a state model described by:

$$x[k+1] = x[k] + w[k] \quad and \quad Y[k] = \begin{bmatrix} y_c[k] \\ SE[k] \end{bmatrix} = H[k] \times x[k] + v[k]$$

   where w[k] is random noise and v[k] is noise associated with said at least one measurement $y_c[k]$, H[k] is defined from the value $f_r[k]$, SE[k] is equal to the expectation of the product between $y_c[k]$ and the conjugate value of $y_c[k]$, x[k] is a vector including, for each mechanical component, a sub-vector the components of which are representative of a contribution of said mechanical component to the vector Y[k],
   - determining (E40) an estimator of the vector x[k] from said matrix H[k], said set of steps further including, for at least one mechanical component, steps of:
   - determining (E50), from said estimator, a characteristic quantity of said contribution associated with said mechanical component,
   - detecting (E70) a possible defect of said at least one mechanical component as a function of a comparison (E60) of said quantity with a threshold.

2. The method according to claim 1, wherein the estimator of the vector x[k] is determined by means of a minimax optimization algorithm or a least squares optimization algorithm.

3. The method according to any one of claims 1 to 2, wherein said quantity is representative of an amplitude or a phase or an energy of said contribution.

4. The method according to any one of claims 1 to 3, said method further including, if a defect is detected, a step of issuing (E80) an alert.

5. The method according to any one of claims 1 to 4, wherein a plurality of absolute acceleration measurements is obtained recurrently, said set (ENS_E) of steps being implemented after each obtaining of an absolute acceleration measurement.

6. A computer program including instructions for implementing a method for monitoring according to any one of claims 1 to 5 when said computer program is executed by a computer.

7. A computer-readable recording medium on which is recorded a computer program according to claim 6.

8. A monitoring device (12) of the state of mechanical components such as bearings and gears on a line shaft equipping a rotating machine, said processing device including:

   - a first obtaining module (MOD_OBT1) configured to obtain at least one measurement $y_c[k]$, k being an integer index, of absolute acceleration of the shaft in a fixed reference frame linked to the rotating machine,
   - a second obtaining module (MOD_OBT2) configured to obtain a value $f_r[k]$ of the rotation frequency of the shaft for a moment wherein said at least one measurement $y_c[k]$ has been acquired,
   - a first determination module (MOD_DET1) configured to determine a matrix H[k] allowing to define a state model described by:

$$x[k+1] = x[k] + w[k] \quad and \quad Y[k] = \begin{bmatrix} y_c[k] \\ SE[k] \end{bmatrix} = H[k] \times x[k] + v[k]$$

where w[k] is random noise and v[k] is noise associated with said at least one measurement $y_c$[k], H[k] is defined as a function of the value $f_r$[k], SE[k] is equal to the expectation of the product between $y_c$[k] and the conjugate value of $y_c$[k], x[k] is a vector including, for each mechanical component, a sub-vector the components of which are representative of the contribution of said mechanical component to the vector Y[k],
- a second determination module (MOD_DET2) configured to determine an estimator of the vector x[k] from said matrix H[k],
- a third determination module (MOD_DET3) configured to determine, from said estimator, at least one characteristic quantity of said contribution associated with a mechanical component,
- a comparison module (MOD_COMP) configured to compare said at least one quantity with a threshold, so as to obtain a comparison result,
- a detection module (MOD_DETECT) configured to detect a possible defect of said at least one mechanical component as a function of the comparison result.

9. Monitoring system (10) of the state of mechanical components such as bearings and gears on a line shaft equipping a rotating machine, said monitoring system including:

- acquisition means (11) of at least one measurement $y_c$[k], k being an integer index, of absolute acceleration of the shaft in a fixed reference frame linked to the rotating machine,
- a monitoring device (12) according to claim 8.

10. Aircraft including a monitoring system (10) according to claim 9.

[Fig. 1]

[Fig. 2]

[Fig. 3]

```
                          ┌─────────────────────────────┐      E10
                          │ Obtention d'au moins une mesure yc[k] │
             ┌───────────▶│  d'accélération absolue de l'arbre    │
             │            └─────────────────────────────┘
             │                         │
  ┌ ─ ─ ─ ─ ─│─ ─ ─ ─ ─ ─ ─│─ ─ ─ ─ ─ ─ ─ ─ ─ ─ ─ ─ ─ ─ ─ ─ ┐
             │            ┌─────────────────────────────┐      E20
  │          │            │   Obtention d'une valeur fr[k] de    │          │
                          │  fréquence de rotation de l'arbre    │
  │          │            └─────────────────────────────┘          │  ENS_E
             │                         │
  │          │            ┌─────────────────────────────┐  E30     │
                          │  Détermination de matrices F et H[k]  │
  │          │            └─────────────────────────────┘          │
             │                         │
  │          │            ┌─────────────────────────────┐  E40     │
                          │  Détermination d'un estimateur d'un   │
  │          │            │        vecteur d'état x[k]            │          │
                          └─────────────────────────────┘
  │          │                         │                           │
             │            ┌─────────────────────────────┐  E50
  │          │            │  Détermination d'une quantité         │          │
             │   ┌───────▶│ caractéristique d'une contribution d'un│◀──┐
  │          │   │        │  composant mécanique à un modèle      │   │      │
                 │        │          d'état                       │   │
  │          │   │        └─────────────────────────────┘   │      │
             │   │                     │                          │
  │          │   │        ┌─────────────────────────────┐  E60  │      │
                 │        │  Comparaison de la quantité avec un seuil│
  │          │   │        └─────────────────────────────┘   │      │
             │   │                     │                          │
  │          │   │              ◇─────────────◇  E70            │      │
                 │             ╱ Détection d'un ╲      ┌──────────┐ E85
  │          │   │            ◀  défaut ?        ▶────▶│ Emission d'une│  │
             │   │             ╲               ╱      │   alerte (X) │
  │          │   │              ◇─────────────◇        └──────────┘ │      │
             │   │                     │ OK
  │          │   │        ┌─────────────────────────────┐  E80          │
             │   └────────│    Emission d'une alerte             │
  │          │            └─────────────────────────────┘               │
             │
  └ ─ ─ ─ ─ ─│─ ─ ─ ─ ─ ─ ─ ─ ─ ─ ─ ─ ─ ─ ─ ─ ─ ─ ─ ─ ─ ─ ─ ─ ─ ─ ┘
             └─────────────────────────────────────────┘
```

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2952177 A1

- EP 3732457 A1

**Littérature non-brevet citée dans la description**

- **J. ANTONI**. Cyclic spectral analysis of rolling-element bearing signals: Facts and fictions. *Journal of Sound and Vibration*, 2007, vol. 304, 497-529

- **SHEN, X.** Discrete H-infinity filter design with application to speech enhancement. *ICASSP*, 1995, vol. 2, 1504-1507